# EUROPÄISCHE PATENTSCHRIFT

(11) **EP 3 405 696 B1**
(45) Veröffentlichungstag und Bekanntmachung des Hinweises auf die Patenterteilung: **20.11.2019**
(21) Anmeldenummer: 16823239.5
(22) Anmeldetag: 19.12.2016
(51) Int. Cl.: F16F 15/14, F16F 15/16

(54) **DREHSCHWINGUNGSDÄMPFUNGSANORDNUNG FÜR EINEN ANTRIEBSSTRANG EINES FAHRZEUGS**
TORSIONAL VIBRATION DAMPING ASSEMBLY FOR A DRIVE TRAIN OF A VEHICLE
ENSEMBLE D'AMORTISSEMENT DE VIBRATIONS DE TORSION POUR TRANSMISSION DE VÉHICULE

(30) Priorität: 22.01.2016 DE 102016200890
(43) Veröffentlichungstag der Anmeldung: 28.11.2018
(73) Patentinhaber: ZF Friedrichshafen AG, 88046 Friedrichshafen (DE)
(72) Erfinder: ORLAMÜNDER, Andreas, 97453 Schonungen (DE); LORENZ, Daniel, 97688 Bad Kissingen (DE); DÖGEL, Thomas, 97720 Nüdlingen (DE); SIEMENS, Kyrill, 97084 Würzburg (DE); WACK, Erwin, 97464 Niederwerrn (DE); DIECKHOFF, Tobias, 97078 Würzburg (DE); TERWART, Markus, 97711 Thundorf (DE); REISCH, Matthias, 88214 Ravensburg (DE); ARZNER, Matthias, 88048 Friedrichshafen (DE)
(86) Internationale Anmeldenummer: PCT/EP2016/081660
(87) Internationale Veröffentlichungsnummer: WO 2017/125223

(56) Entgegenhaltungen:
- DE-A1-102006 061 342

## Beschreibung

Die vorliegende Erfindung betrifft eine Drehschwingungsdämpfungsanordnung für einen Antriebsstrang eines Fahrzeugs, umfassend eine zur Drehung um eine Drehachse anzutreibenden Primärseite und eine über ein Wirkmedium mit der Primärseite zur Drehung um die Drehachse und zur Relativdrehung bezüglich einander gekoppelte Sekundärseite.

Aus der DE 10 2006 061 342 A1 ist eine derartige Drehschwingungsdämpfungsanordnung bekannt, bei der eine Primärseite und eine über eine Dämpferfluidanordnung mit der Primärseite zur Drehung um eine Drehachse und zur Relativdrehung bezüglich einander gekoppelte Sekundärseite, wobei die Dämpferfluidanordnung ein ein Drehmoment zwischen der Primärseite und der Sekundärseite übertragendes erstes Dämpferfluid mit geringerer Kompressibilität in einer ersten Dämpferfluidkammeranordnung umfasst sowie ein bei Druckerhöhung des ersten Dämpferfluids in der ersten Dämpferfluidkammeranordnung belastetes zweites Dämpferfluid mit höherer Kompressibilität in einer zweiten Dämpferfluidkammeranordnung umfasst, wobei die zweite Dämpferfluidkammeranordnung eine Mehrzahl vorzugsweise im Wesentlichen zylindrischer Kammereinheiten umfasst, die bezüglich der ersten Dämpferfluidkammeranordnung radial außen oder/und radial innen und in Umfangsrichtung aufeinander folgend angeordnet sind, wobei in Zuordnung zu jeder Kammereinheit ein das erste Dämpferfluid von dem zweiten Dämpferfluid trennendes und bei Druckveränderung in der Kammereinheit im Wesentlichen radial verlagerbares Trennelement vorgesehen ist. Der Vorteil dieses Schwingungsreduzierungssystems ist die weitgehend beliebig niedrig einstellbare Steifigkeit, die eine sehr gute Entkopplung der Drehschwingungen des Verbrennungsmotors ermöglicht. Jedoch ergibt sich der Nachteil, dass in einem unverzweigten Kettenschwinger trotz niedrigster Steifigkeit die Drehschwingungen nicht hinreichend reduziert werden können, da selbst bei einem Absenken nahe 0 eine Seitenwellensteifigkeit des Fahrzeuges, die zum Restantriebsstrang gehört, das Schwingungsverhalten des gesamten Antriebsstrangs definiert.

Es ist die Aufgabe der vorliegenden Erfindung, eine Drehschwingungsdämpfungsanordnung für einen Antriebsstrang eines Fahrzeugs vorzusehen, mit welcher bei kompakter Bauart und geringem Masseträgheitsmoment eine effiziente Minderung von Drehschwingungen in dem in einem Antriebsstrang übertragenen Drehmoment erreicht werden kann.
Erfindungsgemäß wird diese Aufgabe gelöst durch eine Drehschwingungsdämpfungsanordnung für einen Antriebsstrang eines Fahrzeugs, umfassend eine um eine Drehachse A drehbare Verdrehmassenanordnung und eine außerhalb der Verdrehmassenanordnung angeordnete und mit der Verdrehmassenanordnung wirkverbundene und zur Drehachse A drehfesten Federanordnung, wobei die Verdrehmassenanordnung ein um die Drehachse A drehbares Primärträgheitselement und ein zu dem Primärträgheitselement relativ verdrehbares Sekundärträgheitselement und eine Verdrängereinheit umfasst, wobei die Verdrängereinheit einerseits mit dem Primärträgheitselement und andererseits mit dem Sekundärträgheitselement wirkverbunden ist, wobei die Verdrängereinheit einen Arbeitsraum mit einem Volumen V1 umfasst und wobei durch eine relative Verdrehung um die Drehachse A des Primärträgheitselements zu dem Sekundärträgheitselement aus einer Ruhelage ein Volumen V1 des Arbeitsraumes verändert wird, wobei die Federanordnung einen Nehmerzylinder mit einem Arbeitsraum mit einem Volume V2 umfasst und wobei der Arbeitsraum des Nehmerzylinders mit dem Arbeitsraum der Verdrängereinheit wirkverbunden ist, und wobei der Nehmerzylinder eine Steifigkeit umfasst, die einer Volumenänderung V2 im Arbeitsraum des Nehmerzylinders entgegen wirkt, wobei das Primärträgheitselement oder das Sekundärträgheitselement mit einer Tilgerbaugruppe wirkverbunden ist. Durch eine Trennung der Verdrehmassenanordnung, also dem rotierenden System, und der Federanordnung, dem drehfesten System, kann die Verdrehmassenanordnung, kompakt und folglich mit einem geringen Massenträgheitsmoment ausgebildet werden, was sich vorteilhaft auf ein spontanes Ansprechverhalten des Antriebsaggregates auswirken kann. Dabei kann die Verdrängereinheit beispielsweise aus einem tangential angeordneten Druckzylinder oder einem Rotationskolbenverdränger, wie einem Flügelzellenverdränger oder einem Zahnradverdränger bestehen. Flügelzellenverdränger haben einen endlichen Verdrehwinkel und Zahnradverdränger einen unendlichen Verdrehwinkel. Dabei ist die Funktion der Drehschwingungsdämpfungsanordnung wie folgt. Von einem Antriebsaggregat, vornehmlich ein Verbrennungsmotor, wird ein Drehmoment mit darin enthaltenen Drehschwingungen an die Primärmassenträgheit weiter geleitet. Bei der Übertragung des Drehmomentes mit den enthaltenen Drehschwingungen an die Sekundärmassenträgheit wandelt die Verdrängereinheit, die vornehmlich aus einem Gehäuseelement, einem Verdrängerkolben und einem Arbeitsraum mit einem Volumen V1 besteht, das Drehmoment mit den Drehschwingungen in vornehmlich Fluiddruck mit Wechseldrücken, wenn als ein Wirkmedium eine Flüssigkeit verwendet wird, um. Über eine Verbindungsleitung und eine Drehdurchführung wird der Fluiddruck von der rotierenden Verdrehmassenanordnung an die drehfeste Federanordnung, genauer hier an einen Nehmerzylinder, vornehmlich bestehend aus einem Gehäuseelement, einem Verdrängerkolben und einem Arbeitsraum mit einem Volumen V2 und einem dem Arbeitsraum entgegen wirkenden Gasraum als Gasfeder, weiter geleitet. Der Fluiddruck mit den Wechseldrücken bewirkt nun, dass der Verdrängerkolben mit der Wirkrichtung des Fluiddruckes und den Wechseldrücken bewegt wird. Weiter kann eine Versorgungspumpe, wie eine Öldruckpumpe und ein Druckspeicher an den Fluiddruck angeschlossen werden um zum einen Leckageausgleich zu tätigen. Auch für den Gasraum kann ein Kompressor angeschlossen werden, um Leckagen im Gasraum auszugleichen oder um einen Druck im Gasraum zu verändern. Folglich kann die Steifigkeit zwischen dem Primärträgheitselement und dem Sekundärträgheitselement variabel verändert werden. Dazu kann optional eine Steuerregelungseinheit in Wirkverbindung zu dem Arbeitsraum des Nehmerzylinders verbaut werden, die vorteilhaft Sensoren zur Druckerkennung, Druckregelventile und Druckschaltventile umfasst.

Eine weitere vorteilhafte Ausführungsform sieht vor, dass die Tilgerbaugruppe als ein Fliehkraftpendel ausgeführt ist. Dabei kann die Tilgerbaugruppe als Pendel im Fliehkraftfeld ausgeführt sein. Das kann nach dem bekannten Prinzip von Salomon ausgeführt sein. Es kann aber auch ein Massependel nach dem bekannten Prinzip von Sarazin oder jedes funktional geeignete Massependel verwendet werden. Grundsätzlich sind die bekannten Massependel nach dem Prinzip von Salomon oder Sarazin von ihrer Funktionsweise gleich. Es kann hier auch von einem Sarazintilger und Salomontilger gesprochen werden. Beide Massependel beruhen auf dem Prinzip der Massenverlagerung gegenüber seinem Trägerteil auf Grund sich verändernder Drehzahlen. Der Salomontilger ist bezüglich des radialen Bauraumbedarfs günstiger. Ein weiterer Vorteil beim Salomontilger ist die einfache Anpassung der Abstimmordnung durch eine entsprechende Auslegung einer Bahngeometrie in der sich das Massependel bewegt. Beim Sarazintilger muss dazu der Schwerpunktradius der Massekörper verändert werden z.B. durch eine federnd gelagerte Masse die mit steigender Drehzahl nach radial außen wandert.
Es kann aber auch jede andere Bauart an Fliehkraftpendel, beispielsweise eine Auslenkungsmassenpendeleinheit, bestehend aus einer Auslenkungsmasse und einem elastischen Rückstellelement mit oder ohne variable Einspannlänge, wobei sich diese auch unter Fliehkrafteinwirkung verändern kann, verwendet werden.

Weiter kann es vorteilhaft sein, wenn der Nehmerzylinder als ein Druckspeicher ausgeführt ist, wobei der Druckspeicher einen Verdrängerkolben und einen Energiespeicher umfasst. Dabei trennt der Verdrängerkolben den Arbeitsraum von einem Raumbereich in den der Energiespeicher aufgenommen ist, ab.

In einer weiteren Ausführungsform ist der der Energiespeicher des Druckspeichers ein Gas und / oder ein elastisch verformbares Element ist. Dabei kann als elastisch verformbares Element beispielsweise eine Stahlfeder verwendet werden.

Eine weitere Ausgestaltung sieht vor, dass sich im Arbeitsraum der Verdrängereinheit und im Arbeitsraum des Nehmerzylinders ein Wirkmedium, umfassend ein viskoses Medium, ein Gas oder eine Kombination aus einem viskosem Medium und einem Gas befindet.

Weiter ist es vorteilhaft, wenn dass der Arbeitsraum der Verdrängereinheit mittels einer Verbindungsleitung mit dem Arbeitsraum des Nehmerzylinders wirkverbunden ist.

Eine weitere Ausführungsform sieht vor, dass die Verbindungsleitung eine Drehdurchführung umfasst, wobei die Drehdurchführung den um die Drehachse A drehbaren Arbeitsraum der Verdrängereinheit und den zur Verdrängereinheit und zur Drehachse A drehfesten Arbeitsraum des Nehmerzylinders flüssigkeitsdicht und oder gasdicht und zueinander verdrehbar verbindet.

Weiter kann es vorteilhaft sein, wenn die Federanordnung eine Versorgungspumpe und oder einen Kompressor umfasst, wobei die Versorgungspumpe und / oder der Kompressor mit dem Arbeitsraum des Nehmerzylinders und oder mit einem Raumbereich des Energiespeicher des Nehmerzylinders wirkverbunden ist.

Eine weitere vorteilhafte Ausführungsform sieht vor, dass der Festfrequenztilger eine Tilgermasse umfasst, wobei die Tilgermasse mittels einer Verdrängereinheit mit dem Primärträgheitselement oder dem Sekundärträgheitselement wirkverbunden ist.

Eine weitere günstige Ausgestaltung sieht vor, dass die Verdrängereinheit einen Arbeitsraum umfasst, der mit der Federanordnung wirkverbunden ist.

Weiter kann es vorteilhaft sein, wenn die Verdrängereinheit der Tilgerbaugruppe einen Arbeitsraum umfasst, der mit einer Federanordnung wirkverbunden ist.

Eine weitere günstige Ausgestaltung zu der vorangehenden sieht vor, dass die Federanordnung zu der Drehachse A drehfest ist.

Eine weitere vorteilhafte Ausführungsform sieht vor, dass die Federanordnung einen Nehmerzylinder mit einem Arbeitsraum mit einem Volume V3 umfasst und wobei der Arbeitsraum des Nehmerzylinders mit dem Arbeitsraum der Verdrängereinheit wirkverbunden ist, und wobei der Nehmerzylinder eine Steifigkeit umfasst, die einer Volumenänderung V3 im Arbeitsraum des Nehmerzylinders entgegen wirkt.

Eine weitere vorteilhafte Ausgestaltung sieht vor, dass die Verdrehmassenanordnung eine Gasfedereinheit mit einem Arbeitsraum, einem Trennkolben und einem Gasraum, wobei der Arbeitsraum mittels einer Hydraulikflüssigkeit mit dem Arbeitsraum der Verdrängereinheit wirkverbunden ist.

Die vorliegende Erfindung wird nachfolgend mit Bezug auf die beiliegenden Figuren detailliert beschrieben. Es zeigt:
Fig. 1 eine Drehschwingungsdämpfungsanordnung mit einer Verdrehmassenanordnung mit Tilgerbaugruppe und einer Federanordnung mit einer Gasfeder als Energiespeich
   er
Fig. 2 eine Drehschwingungsdämpfungsanordnung wie in Figur 1, jedoch mit einem elastisch verformbaren Element als Energiespeicher
Fig. 3 eine Drehschwingungsdämpfungsanordnung wie in Figur 1, jedoch mit einer gemeinsamen Steifigkeit von Tilgerbaugruppe und Verdrängereinheit
Fig. 4 eine Drehschwingungsdämpfungsanordnung wie in Figur 3, jedoch mit einer getrennten Steifigkeit für Tilgerbaugruppe und Verdrängereinheit.
Fig. 5 eine Drehschwingungsdämpfungsanordnung wie in Figur 2, jedoch mit einer Verdrehmassenanordnung mit einem zusätzlichen Druckspeicher.

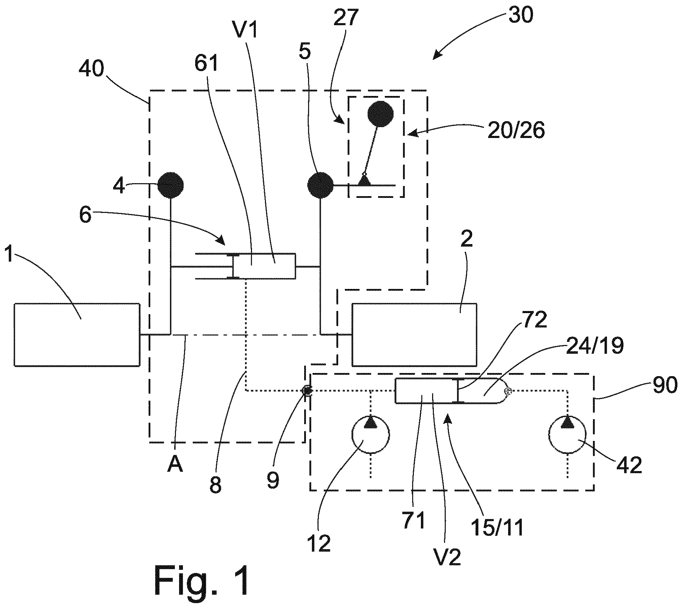

Die Figur 1 zeigt eine Drehschwingungsdämpfungsanordnung 30 mit einer Verdrehmassenanordnung 40 mit einer Tilgerbaugruppe 20 und einer externen und nicht zur Drehachse A drehfesten Federanordnung 90 mit einer Gasfeder als Energiespeicher 24. Hierbei ist an der Sekundärmassenträgheit 5 eine Tilgerbaugruppe 20 angebracht, die hier in Form eines Fliehkraftpendels 26 ausgeführt ist. Dabei ist die Funktionsweise wie folgt. Von einem Antriebsaggregat 1, vornehmlich ein Verbrennungsmotor wird ein Drehmoment mit den darin enthaltenen Drehschwingungen an ein Primärträgheitselement 4 geleitet. Gegen die Wirkkraft einer Verdrängereinheit 6, die vornehmlich hier aus einem Gehäuseelement 60, einem Verdrängerkolben 62 und einem Arbeitsraum 61 mit einem Volumen V1 besteht, wird das Drehmoment an das Sekundärträgheitselement 5 und anschließend an ein Getriebeaggregat 2 weiter gegeben. Dabei wird das Drehmoment mit den Drehschwingungen in der Verdrängereinheit 6 in einen Fluiddruck mit Wechseldrücken, bei der Verwendung von einer Hydraulikflüssigkeit als ein Wirkmedium 63, umgewandelt. Dabei wird der Fluiddruck mit den Wechseldrücken über eine Verbindungsleitung 8 und eine Drehdurchführung 9 zu einem Arbeitsraum 71 mit einem Volumen V2 des Nehmerzylinders 15 der Federanordnung 90 geleitet. Ein Verdrängerkolben 72 trennt den Arbeitsraum 71 von einem Gasraum 48 ab. In dem Gasraum befindet sich ein Gasdruck als Energiespeicher und stellt folglich die Steifigkeit der Verdrehmassenanordnung 40 dar. Optional kann eine Versorgungspumpe an den Kreislauf des Wirkmediums 63 angeschlossen werden um eine Druckerhöhung oder eine Druckreduzierung oder auch um einen Leckageausgleich zu erzielen. Auch an den Gasraum 48 kann ein Kompressor 42 angeschlossen werden um eine Druckänderung oder einen Leckageausgleich vorzusehen. Vorzugsweise wird dann eine Steuerregelungseinheit, hier nicht dargestellt, verwendet, die den notwendigen Druck des Wirkmediums regeln kann. Die Steuerregelungseinheit umfasst vorteilhaft Sensoren zur Druckerkennung, Druckregelventile und Druckschaltventile.
Wird der Druck im Gasraum 48 erhöht, so bedeutet das mehr Gasmasse und das entspricht dabei einer größeren Speicherkapazität, so dass die Steifigkeit 19 über die reine Betriebspunktverschiebung auf der progressiven Gasfederkennlinie hinaus auch bei hohem Druck und damit bei einem hohen Drehmoment minimal gehalten werden kann.
Aufgrund niedrigerer Steifigkeit 19 kann eine Tilgermasse 17 der Tilgerbaugruppe 20 geringer gehalten werden.
Die Tilgerbaugruppe Pos.20 ist hier als Pendel im Fliehkraftfeld zu verstehen. Es kann aber auch jede andere Bauart an Fliehkraftpendel, beispielsweise ein Sarazinti-Iger, Salomontilger oder auch wie in vorangegangenen Figuren dargestellt ein Festfrequenztilger bestehend aus Steifigkeit und Masse eingesetzt werden.

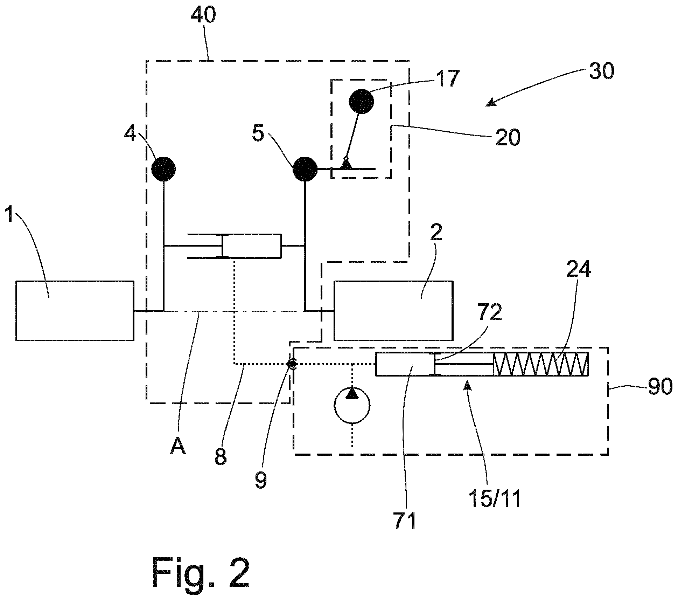

Die Figur 2 zeigt eine Drehschwingungsdämpfungsanordnung 30 wie in der Figur 1 bereits beschrieben, jedoch mit einem elastisch verformbaren Element 84 als Energiespeicher 24. Dies kann beispielsweise in Form einer Stahlfeder erfolgen. Dies hat den Vorteil, dass keine Gefahr des Gasverlustes besteht und dadurch die Herstellung kostengünstiger ist, da die Abdichtung des Fluids einfacher ist. Für die weitere Beschreibung wird auf die Beschreibung der Figur 1 verwiesen.

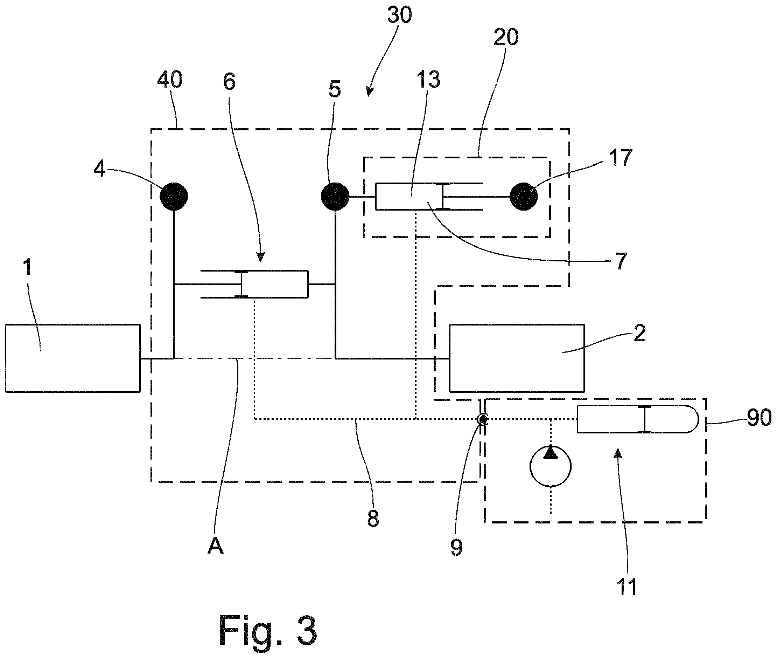

Die Figur 3 zeigt eine Drehschwingungsdämpfungsanordnung 30 wie in der Figur 1 beschrieben, jedoch mit einer gemeinsamen Steifigkeit von der Tilgerbaugruppe 20 und der Verdrängereinheit 6. Dabei ist hier die Tilgermasse 17 über eine eigene Verdrängereinheit 7 mit dem Sekundärträgheitselement 5 verbunden. Ein Arbeitsraum 13 der Verdrängereinheit 7 der Tilgerbaugruppe ist dabei mit der Verbindungsleitung 8 ebenfalls mit der Federanordnung 90 verbunden. Durch eine geeignete Abstimmung über eingesetzte Drosseln, hier nicht dargestellt, sind die Druckverhältnisse so eingestellt, dass in der Steifigkeit, die zwischen dem Primärträgheitselement 4 und dem Sekundärträgheitselement 5 wirkt ohne Erreichen eines Anschlages des Verdrängereinheit 6 ein Nennmoment übertragbar ist und in der Verdrängereinheit 7 der Tilgerbaugruppe 20 ein Betriebsdruckbereich eingestellt ist, der in Kombination mit der externen Gasfeder im Gasraum 48 eine für die zu tilgende Ordnung korrekte Tilgersteifigkeit einstellt.
Für die weitere Beschreibung wird auf die Beschreibung der Figur 1 verwiesen.

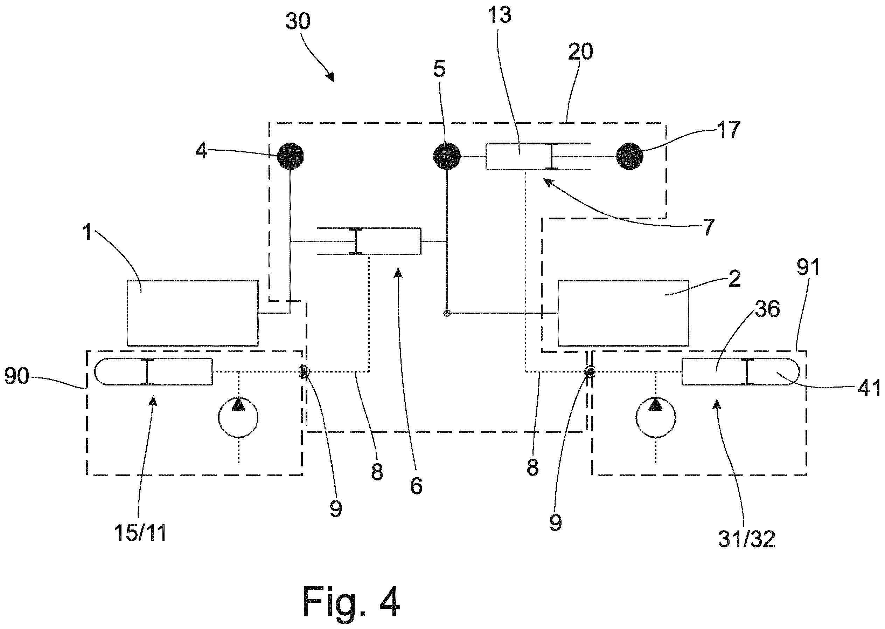

Die Figur 4 zeigt eine Drehschwingungsdämpfungsanordnung wie in der Figur 3 gezeigt, jedoch mit einer getrennten Steifigkeit für die Tilgerbaugruppe 20 und der Verdrängereinheit 6, die zwischen dem Primärträgheitselement 4 und dem Sekundärträgheitselement 5 wirkt. Sollte das System nicht gemäß Figur abstimmbar sein, wandeln jeweils getrennte Federanordnungen 90, 91 die Steifigkeiten. Dies ist vorteilhaft, da die beiden Federanordnungen 90, 91 getrennt einstellbar sind.
Die beiden Ölpumpen können bei Einsatz von Druckregelventilen oder Drosseln zu einer gemeinsamen Pumpe zusammengefasst werden, wenn nur eine Ölversorgung für Leckageausgleich erforderlich ist. Für die weitere Beschreibung wird auf die Beschreibung der Figur 3 verwiesen.

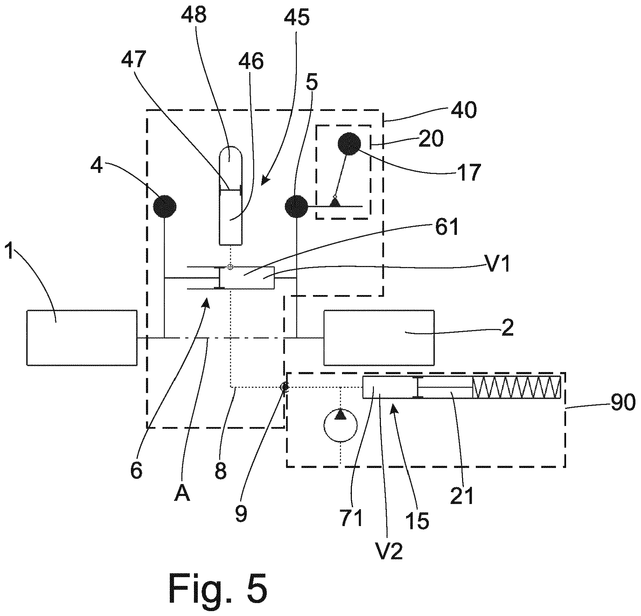

Die Figur 5 zeigt eine Drehschwingungsdämpfungsanordnung 30 wie in Figur 2 beschrieben, jedoch mit einer Verdrehmassenanordnung 40, die einen zusätzlichen Druckspeicher in Form einer Gasfedereinheit 45 mit einem Arbeitsraum 46, einem Trennkolben 47 und einem Gasraum 48. Dabei ist der Arbeitsraum 46 mittels einer Verbindungsleitung 49 mit dem Arbeitsraum 61 der Verdrängereinheit 6 wirkverbunden. Aus der Verdrängereinheit 6 bekommt der Arbeitsraum 46 der Gasfedereinheit 45 einen Öldruck, der durch das Wirkmedium 63, hier Hydraulikflüssigkeit, weitergeleitet wird. Dieses Fluid komprimiert unter einem Verschieben des Trennkolbens 47 das Gas im Gasraum 48, welches als ein Federelement wirkt. Der Trennkolben 47 hat die Aufgabe, eine Vermischung von Fluid und Gas zu vermeiden, auch Verschäumung genannt und kann auch eine elastische Membran sein. Für die weitere Beschreibung wird auf die Beschreibung der Figur 2 verwiesen.

### Bezugszeichen

- 1: Antriebsaggregat
- 2: Getriebeaggregat
- 4: Primärträgheitselement
- 5: Sekundärträgheitselement
- 6: Verdrängereinheit
- 7: Verdrängereinheit
- 8: Verbindungsleitung
- 9: Drehdurchführung
- 10: Steuerregelungseinheit
- 11: Druckspeicher
- 12: Versorgungspumpe
- 13: Arbeitsraum
- 15: Nehmerzylinder
- 16: Steifigkeitsanordnung
- 17: Tilgermasse
- 18: Lastfederelement
- 19: Steifigkeit
- 20: Tilgerbaugruppe
- 21: Energiespeicher
- 22: Energiespeicher
- 23: Energiespeicher
- 24: Energiespeicher
- 26: Fliehkraftpendel
- 27: Festfrequenztilger
- 28: Tilgermassenanordnung
- 29: Tilgermasse
- 30: Drehschwingungsdämpfungsanordnung
- 31: Nehmerzylinder
- 32: Druckspeicher
- 36: Arbeitsraum
- 40: Verdrehmassenanordnung
- 41: Steifigkeit
- 42: Kompressor
- 45: Gasfedereinheit
- 46: Arbeitsraum
- 47: Trennkolben
- 48: Gasraum
- 49: Verbindungsleitung
- 60: Gehäuseelement
- 61: Arbeitsraum
- 62: Verdrängerkolben
- 63: Wirkmedium
- 70: Gehäuseelement
- 71: Arbeitsraum
- 72: Verdrängerkolben
- 73: Raumbereich
- 81: Arbeitsraum
- 83: gaskompressibles Element
- 84: elastisch verformbares Element
- 90: Federanordnung
- 91: Federanordnung
- V1: Volumen
- V2: Volumen
- V3: Volumen
- A: Drehachse

## Patentansprüche

1. Drehschwingungsdämpfungsanordnung (30) für einen Antriebsstrang eines Kraftfahrzeugs, umfassend
eine um eine Drehachse A drehbare Verdrehmassenanordnung (40) und eine außerhalb der Verdrehmassenanordnung (40) angeordnete und mit der Verdrehmassenanordnung (40) wirkverbundene und zur Drehachse A drehfesten Federanordnung (90),
wobei die Verdrehmassenanordnung (40) ein um die Drehachse A drehbares Primärträgheitselement (4) und ein zu dem Primärträgheitselement (4) relativ verdrehbares Sekundärträgheitselement (5) und eine Verdrängereinheit (6) umfasst, wobei die Verdrängereinheit (6) einerseits mit dem Primärträgheitselement (4) und andererseits mit dem Sekundärträgheitselement (5) wirkverbunden ist,
wobei die Verdrängereinheit (6) einen Arbeitsraum (61) mit einem Volumen V1 umfasst und wobei durch eine relative Verdrehung um die Drehachse A des Primärträgheitselements (4) zu dem Sekundärträgheitselement (5) aus einer Ruhelage ein Volumen V1 des Arbeitsraumes (61) verändert wird,
**dadurch gekennzeichnet, dass** die Federanordnung (90) einen Nehmerzylinder (15) mit einem Arbeitsraum (71) mit einem Volume V2 umfasst und wobei der Arbeitsraum (71) des Nehmerzylinders (15) mit dem Arbeitsraum (61) der Verdrängereinheit (6) wirkverbunden ist, und dass der Nehmerzylinder eine Steifigkeit (19) umfasst, die einer Volumenänderung V2 im Arbeitsraum (71) des Nehmerzylinders (15) entgegen wirkt,
und dass das Primärträgheitselement (4) oder das Sekundärträgheitselement (5) mit einer Tilgerbaugruppe (20) wirkverbunden ist.

2. Drehschwingungsdämpfungsanordnung (30) nach Anspruch 1, **dadurch gekennzeichnet, dass** die Tilgerbaugruppe (20) als ein Fliehkraftpendel (26) ausgeführt ist.

3. Drehschwingungsdämpfungsanordnung (30) nach Anspruch 1, **dadurch gekennzeichnet, dass** die Tilgerbaugruppe (20) als ein Festfrequenztilger (27) ausgeführt ist.

4. Drehschwingungsdämpfungsanordnung (30) nach einem der Ansprüche 1 bis 3, **dadurch gekennzeichnet, dass** der Nehmerzylinder (15) als ein Druckspeicher (11) ausgeführt ist, wobei der Druckspeicher einen Verdrängerkolben (72) und einen Energiespeicher (24) umfasst.

5. Drehschwingungsdämpfungsanordnung (30) nach Anspruch 4, **dadurch gekennzeichnet, dass** der Energiespeicher (24) des Druckspeichers (11) ein Gas und / oder ein elastisch verformbares Element ist.

6. Drehschwingungsdämpfungsanordnung (30) nach einem der vorangehenden Ansprüche, **dadurch gekennzeichnet, dass** sich im Arbeitsraum (61) der Verdrängereinheit (6) und im Arbeitsraum (71) des Nehmerzylinders (15) ein Wirkmedium (63), umfassend ein viskoses Medium, ein Gas oder eine Kombination aus einem viskosem Medium und einem Gas.

7. Drehschwingungsdämpfungsanordnung (30) nach einem der vorangehenden Ansprüche, **dadurch gekennzeichnet, dass** der Arbeitsraum (61) der Verdrängereinheit (6) mittels einer Verbindungsleitung (8) mit dem Arbeitsraum (71) des Nehmerzylinders (15) wirkverbunden ist.

8. Drehschwingungsdämpfungsanordnung (30) nach einem der vorangehenden Ansprüche, **dadurch gekennzeichnet, dass** die Verbindungsleitung (8) eine Drehdurchführung (9) umfasst, wobei die Drehdurchführung (9) den um die Drehachse A drehbaren Arbeitsraum (61) der Verdrängereinheit (6) und den zur Verdrängereinheit (6) und zur Drehachse A drehfesten Arbeitsraum (71) des Nehmerzylinders (15) flüssigkeitsdicht und oder gasdicht und zueinander verdrehbar verbindet.

9. Drehschwingungsdämpfungsanordnung (30) nach einem der vorangehenden Ansprüche, **dadurch gekennzeichnet, dass** die Federanordnung (90) eine Versorgungspumpe (12) und oder einen Kompressor (90) umfasst, wobei die Versorgungspumpe (12) und / oder der Kompressor (90) mit dem Arbeitsraum (71) des Nehmerzylinders (15) und oder mit einem Raumbereich (73) des Energiespeicher (24) des Nehmerzylinders (15) wirkverbunden ist.

10. Drehschwingungsdämpfungsanordnung (30) nach Anspruch 3, **dadurch gekennzeichnet, dass** der Festfrequenztilger (27) eine Tilgermasse (17) umfasst, wobei die Tilgermasse (17) mittels einer Verdrängereinheit (7) mit dem Primärträgheitselement (4) oder dem Sekundärträgheitselement (5) wirkverbunden ist.

11. Drehschwingungsdämpfungsanordnung (30) nach Anspruch 10, **dadurch gekennzeichnet, dass** die Verdrängereinheit (7) einen Arbeitsraum (13) umfasst, der mit der Federanordnung (90) wirkverbunden ist.

12. Drehschwingungsdämpfungsanordnung (30) nach Anspruch 10, **dadurch gekennzeichnet, dass** die Verdrängereinheit (7) der Tilgerbaugruppe (20) einen Arbeitsraum (13) umfasst, der mit einer Federanordnung (91) wirkverbunden ist.

13. Drehschwingungsdämpfungsanordnung (30) nach Anspruch 12, **dadurch gekennzeichnet, dass** die Federanordnung (91) um zu der Drehachse A drehfest ist.

14. Drehschwingungsdämpfungsanordnung (30) nach Anspruch 13, **dadurch gekennzeichnet, dass** die Federanordnung (91) einen Nehmerzylinder (31) mit einem Arbeitsraum (36) mit einem Volume V3 umfasst und wobei der Arbeitsraum (36) des Nehmerzylinders (31) mit dem Arbeitsraum (13) der Verdrängereinheit (7) wirkverbunden ist, und wobei der Nehmerzylinder (31) eine Steifigkeit (41) umfasst, die einer Volumenänderung V3 im Arbeitsraum (13) des Nehmerzylinders (31) entgegen wirkt.

15. Drehschwingungsdämpfungsanordnung (30) nach einem der Ansprüche 1 oder 2, **dadurch gekennzeichnet, dass** die Verdrehmassenanordnung (40) eine Gasfedereinheit (45) mit einem Arbeitsraum (46), einem Trennkolben (47) und einem Gasraum (48), wobei der Arbeitsraum (46) mittels einer Hydraulikflüssigkeit mit dem Arbeitsraum (61) der Verdrängereinheit (6) wirkverbunden ist.

## Claims

1. Torsional vibration damping assembly (30) for a drive train of a motor vehicle, comprising
a rotational mass assembly (40), which can be rotated about an axis of rotation A, and a spring assembly (90) which is arranged outside the rotational mass assembly (40), is operatively connected to the rotational mass assembly (40) and is rotationally fixed with respect to the axis of rotation A,
wherein the rotational mass assembly (40) comprises a primary inertia element (4), which can be rotated about the axis of rotation A, and a secondary inertia element (5), which is rotatable relative to the primary inertia element (4), and a displacing unit (6), wherein the displacing unit (6) is operatively connected to the primary inertia element (4) on one side and to the secondary inertia element (5) on the other side,
wherein the displacing unit (6) comprises a working chamber (61) with a volume V1, and wherein a volume V1 of the working chamber (61) is changed by a relative rotation about the axis of rotation A of the primary inertia element (4) with respect to the secondary inertia element (5) from a rest position,
**characterized in that**
the spring assembly (90) comprises a slave cylinder (15) having a working chamber (71) with a volume V2, and wherein the working chamber (71) of the slave cylinder (15) is operatively connected to the working chamber (61) of the displacing unit (6),
and **in that**
the slave cylinder comprises a stiffness (19) which counteracts a volume change V2 in the working chamber (71) of the slave cylinder (15),
and **in that** the primary inertia element (4) or the secondary inertia element (5) is operatively connected to an absorber assembly (20).

2. Torsional vibration damping assembly (30) according to Claim 1, **characterized in that** the absorber assembly (20) is configured as a centrifugal pendulum (26).

3. Torsional vibration damping assembly (30) according to Claim 1, **characterized in that** the absorber assembly (20) is configured as a fixed frequency absorber (27).

4. Torsional vibration damping assembly (30) according to one of Claims 1 to 3, **characterized in that** the slave cylinder (15) is configured as a pressure accumulator (11), wherein the pressure accumulator comprises a displacing piston (72) and an energy accumulator (24).

5. Torsional vibration damping assembly (30) according to Claim 4, **characterized in that** the energy accumulator (24) of the pressure accumulator (11) is a gas and/or an elastically deformable element.

6. Torsional vibration damping assembly (30) according to one of the preceding claims, **characterized in that** an operative medium (63), comprising a viscous medium, a gas or a combination of a viscous medium and a gas, in the working chamber (61) of the displacing unit (6) and in the working chamber (71) of the slave cylinder (15).

7. Torsional vibration damping assembly (30) according to one of the preceding claims, **characterized in that** the working chamber (61) of the displacing unit (6) is operatively connected to the working chamber (71) of the slave cylinder (15) by means of a connection line (8).

8. Torsional vibration damping assembly (30) according to one of the preceding claims, **characterized in that** the connection line (8) comprises a rotary lead-through (9), wherein the rotary lead-through (9) connects the working chamber (61), which can be rotated about the axis of rotation A, of the displacing unit (6) and the working chamber (71), which is rotationally fixed with respect to the displacing unit (6) and to the axis of rotation A, of the slave cylinder (15) in a liquid-tight and/or gas-tight manner and in a manner such that they can be rotated with respect to one another.

9. Torsional vibration damping assembly (30) according to one of the preceding claims, **characterized in that** the spring assembly (90) comprises a supply pump (12) and/or a compressor (90), wherein the supply pump (12) and/or the compressor (90) are/is operatively connected to the working chamber (71) of the slave cylinder (15) and/or to a spatial region (73) of the energy accumulator (24) of the slave cylinder (15).

10. Torsional vibration damping assembly (30) according to Claim 3, **characterized in that** the fixed frequency absorber (27) comprises an absorber mass (17), wherein the absorber mass (17) is operatively connected by means of a displacing unit (7) to the primary inertia element (4) or the secondary inertia element (5).

11. Torsional vibration damping assembly (30) according to Claim 10, **characterized in that** the displacing unit (7) comprises a working chamber (13) which is operatively connected to the spring assembly (90).

12. Torsional vibration damping assembly (30) according to Claim 10, **characterized in that** the displacing unit (7) of the absorber assembly (20) comprises a working chamber (13) which is operatively connected to a spring assembly (91).

13. Torsional vibration damping assembly (30) according to Claim 12, **characterized in that** the spring assembly (91) is rotationally fixed about with respect to the axis of rotation A.

14. Torsional vibration damping assembly (30) according to Claim 13, **characterized in that** the spring assembly (91) comprises a slave cylinder (31) having a working chamber (36) with a volume V3, and wherein the working chamber (36) of the slave cylinder (31) is operatively connected to the working chamber (13) of the displacing unit (7), and wherein the slave cylinder (31) comprises a stiffness (41) which counteracts a volume change V3 in the working chamber (13) of the slave cylinder (31).

15. Torsional vibration damping assembly (30) according to either of Claims 1 and 2, **characterized in that** the rotational mass assembly (40) a gas spring unit (45) with a working chamber (46), a separating piston (47) and a gas chamber (48), wherein the working chamber (46) is operatively connected to the working chamber (61) of the displacing unit (6) by means of a hydraulic liquid.

## Revendications

1. Ensemble d'amortissement de vibrations de torsion (30) pour une chaîne cinématique d'un véhicule automobile, comprenant
un agencement de masse tournante (40) pouvant tourner autour d'un axe de rotation A et un agencement de ressort (90) disposé à l'extérieur de l'agencement de masse tournante (40) et en liaison active avec l'agencement de masse tournante (40) et calé en rotation par rapport à l'axe de rotation A,
dans lequel l'agencement de masse tournante (40) comprend un élément d'inertie primaire (4) pouvant tourner autour de l'axe de rotation A et un élément d'inertie secondaire (5) pouvant tourner par rapport à l'élément d'inertie primaire (4) et une unité de refoulement (6), dans lequel l'unité de refoulement (6) est en liaison active d'une part avec l'élément d'inertie primaire (4) et d'autre part avec l'élément d'inertie secondaire (5),
dans lequel l'unité de refoulement (6) comprend une chambre de travail (61) avec un volume V1 et dans lequel un volume V1 de la chambre de travail (61) est modifié par une rotation relative autour de l'axe de rotation A de l'élément d'inertie primaire (4) par rapport à l'élément d'inertie secondaire (5) à partir d'une position de repos,
**caractérisé en ce que** l'agencement de ressort (90) comprend un cylindre récepteur (15) avec une chambre de travail (71) ayant un volume V2 et dans lequel la chambre de travail (71) du cylindre récepteur (15) est en liaison active avec la chambre de travail (61) de l'unité de refoulement (6), et **en ce que** le cylindre récepteur comprend un raidissement (19), qui s'oppose à un changement de volume V2 dans la chambre de travail (71) du cylindre récepteur (15), et **en ce que** l'élément d'inertie primaire (4) ou l'élément d'inertie secondaire (5) est en liaison active avec un module d'amortisseur (20).

2. Ensemble d'amortissement de vibrations de torsion (30) selon la revendication 1, **caractérisé en ce que** le module d'amortisseur (20) est réalisé sous forme d'absorbeur à pendule centrifuge (26).

3. Ensemble d'amortissement de vibrations de torsion (30) selon la revendication 1, **caractérisé en ce que** le module d'amortisseur (20) est réalisé sous forme d'absorbeur à fréquence fixe (27).

4. Ensemble d'amortissement de vibrations de torsion (30) selon l'une quelconque des revendications 1 à 3, **caractérisé en ce que** le cylindre récepteur (15) est réalisé sous forme de réservoir sous pression (11), dans lequel le réservoir sous pression comprend un piston de refoulement (72) et un accumulateur d'énergie (24).

5. Ensemble d'amortissement de vibrations de torsion (30) selon la revendication 4, **caractérisé en ce que** l'accumulateur d'énergie (24) du réservoir sous pression (11) est un gaz et/ou un élément déformable élastiquement.

6. Ensemble d'amortissement de vibrations de torsion (30) selon l'une quelconque des revendications précédentes, **caractérisé en ce que** dans la chambre de travail (61) de l'unité de refoulement (6) et dans la chambre de travail (71) du cylindre récepteur (15) un milieu actif (63), comprenant un milieu visqueux, un gaz ou une combinaison d'un milieu visqueux et d'un gaz.

7. Ensemble d'amortissement de vibrations de torsion (30) selon l'une quelconque des revendications précédentes, **caractérisé en ce que** la chambre de travail (61) de l'unité de refoulement (6) est en liaison active avec la chambre de travail (71) du cylindre récepteur (15) au moyen d'une conduite de liaison (8).

8. Ensemble d'amortissement de vibrations de torsion (30) selon l'une quelconque des revendications précédentes, **caractérisé en ce que** la conduite de liaison (8) comprend une traversée rotative (9), dans lequel la traversée rotative (9) relie de façon rotative l'une par rapport à l'autre et de façon étanche au liquide et/ou étanche au gaz, la chambre de travail (61), pouvant tourner autour de l'axe de rotation A, de l'unité de refoulement (6) et la chambre de travail (71), calée en rotation par rapport à l'unité de refoulement (6) et par rapport à l'axe de rotation A, du cylindre récepteur (15).

9. Ensemble d'amortissement de vibrations de torsion (30) selon l'une quelconque des revendications précédentes, **caractérisé en ce que** l'agencement de ressort (90) comprend une pompe d'alimentation (12) et/ou un compresseur (90), dans lequel la pompe d'alimentation (12) et/ou le compresseur (90) est en liaison active avec la chambre de travail (71) du cylindre récepteur (15) et/ou avec une région de chambre (73) de l'accumulateur d'énergie (24) du cylindre récepteur (15).

10. Ensemble d'amortissement de vibrations de torsion (30) selon la revendication 3, **caractérisé en ce que** l'amortisseur à fréquence fixe (27) comprend une masse d'amortisseur (17), dans lequel la masse d'amortisseur (17) est en liaison active par l'intermédiaire d'une unité de refoulement (7) avec l'élément d'inertie primaire (4) ou l'élément d'inertie secondaire (5).

11. Ensemble d'amortissement de vibrations de torsion (30) selon la revendication 10, **caractérisé en ce que** l'unité de refoulement (7) comprend une chambre de travail (13), qui est en liaison active avec l'agencement de ressort (90).

12. Ensemble d'amortissement de vibrations de torsion (30) selon la revendication 10, **caractérisé en ce que** l'unité de refoulement (7) du module d'amortisseur (20) comprend une chambre de travail (13), qui est en liaison active avec un agencement de ressort (91).

13. Ensemble d'amortissement de vibrations de torsion (30) selon la revendication 12, **caractérisé en ce que** l'agencement de ressort (91) est calé en rotation autour par rapport à l'axe de rotation A.

14. Ensemble d'amortissement de vibrations de torsion (30) selon la revendication 13, **caractérisé en ce que** l'agencement de ressort (91) comprend un cylindre récepteur (31) avec une chambre de travail (36) ayant un volume V3 et dans lequel la chambre de travail (36) du cylindre récepteur (31) est en liaison active avec la chambre de travail (13) de l'unité de refoulement (7), et dans lequel le cylindre récepteur (31) comprend un raidissement (41), qui s'oppose à un changement de volume V3 dans la chambre de travail (13) du cylindre récepteur (31).

15. Ensemble d'amortissement de vibrations de torsion (30) selon une des revendications 1 ou 2, **caractérisé en ce que** l'agencement de masse tournante (40) une unité de ressort à gaz (45) avec une chambre de travail (46), un piston de séparation (47) et une chambre à gaz (48), dans lequel la chambre de travail (46) est en liaison active avec la chambre de travail (61) de l'unité de refoulement (6) au moyen d'un liquide hydraulique.
